# EUROPEAN PATENT SPECIFICATION

(11) **EP 0 644 108 B1**
(45) Date of publication and mention of the grant of the patent: **15.01.1997**
(21) Application number: 94306770.2
(22) Date of filing: 15.09.1994
(51) Int. Cl.: B62K 25/04, B62L 1/06

(54) **Bicycle front wheel control mechanism**
Fahrrad mit Vorderradkontrollmechanismus
Mécanisme de contrôle d'une roue avant de bicyclette

(30) Priority: 16.09.1993 JP 230192/93
(43) Date of publication of application: 22.03.1995
(73) Proprietor: Motobu, Hirotetsu, Kyoto-shi, Kyoto-Fu (JP); Yoshioka, Koji, Nara-shi, Nara-Ken (JP); Kita, Masanobu, Yamatokooriyama-Shi, Nara-Ken (JP); Kanno, Akira, Kyoto-Shi, Kyoto-Fu (JP); Saiba, Takayoshi, Owariasahi, Aichi-Ken (JP)
(72) Inventor: Motobu, Hirotetsu, 21, Tsutsui-Iga-Nishi-machi, Kyoto-shi, Kyoto-fu (JP); Yoshioka, Koji, Nara-shi, Nara-ken (JP); Kita, Masanobu, Nara-ken (JP); Kanno, Akira, Kyoto-shi, Kyoto-fu (JP)
(74) Representative: Hamilton, Alistair

(56) References cited:
- FR-A- 555 161
- GB-A- 641 656
- US-A- 4 162 084

## Description

This invention relates to a bicycle front wheel and a front wheel control mechanism equipped with a suspension system and a brake system.

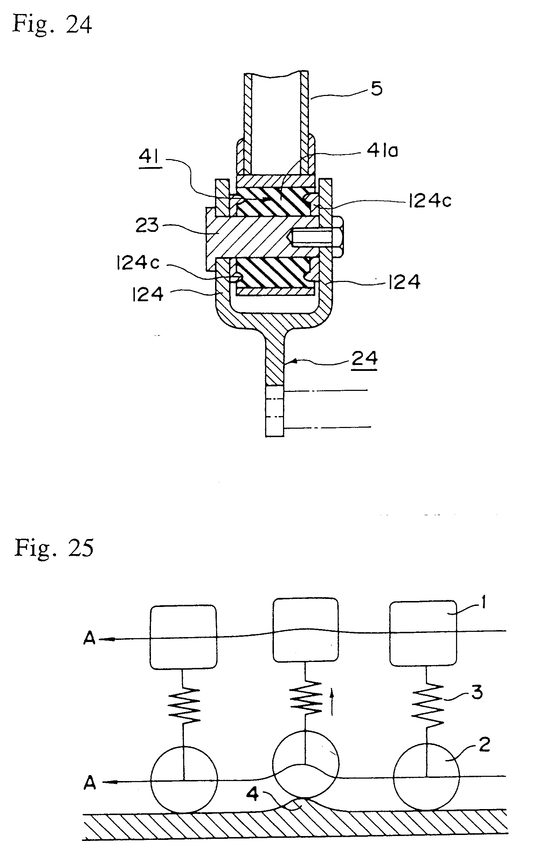

Fig. 25 is a view showing a working principle of a general conventional suspension system. 1 denotes a body, 2 denotes a wheel, and 3 denotes a coil spring. This suspension system is so devised that, when the body 1 and the wheel 2 advance in a direction of arrow A to pass over a bump 4 of a road surface, the coil spring 3 compresses in a vertical direction to allow the wheel 2 to move upwards so as to moderate a shock given to the body 1.

It has hitherto been considered that the suspension system as mentioned above has not necessarily been required for an ordinary bicycle for the following reasons (1) to (3).
(1) The bicycle is a vehicle which is pedalled by a rider. However, when the suspension system as mentioned above is adopted, the body 1 can vibrate in the vertical direction by means of the coil spring 3 with the result that the rider cannot pedal it with all his strength. Such a phenomenon is expressed as "lost of force".
(2) Part of the kinetic energy developed by the rider is transformed to a vibration energy within the suspension system so increasing fatigue of the rider.
(3) Since an ordinary bicycle does not travel at high speed, shocks felt by the rider are comparatively small when he pedals the bicycle on a rough road. Therefore, there is little need for a suspension system.

Consequently, the use of the suspension system as mentioned above is typically limited to a bicycle such as "mountain bicycles" for riding around hills and fields for pleasure, such a bicycle being used for descending steep slopes and crossing rough terrain.

On the other hand, airplanes and automobiles are equipped with anti-skid devices in order to prevent their wheels from being locked during braking. The reason for this is that, when a wheel is locked during braking, not only does the braking distance increase, but also steering control may be lost, which may result in the vehicle moving in a direction other than that intended by its driver with dangerous consequences. Such a device for preventing the locking of wheels during braking is considered to be desirable also for a bicycle. However, an appropriate system has not hitherto been available.

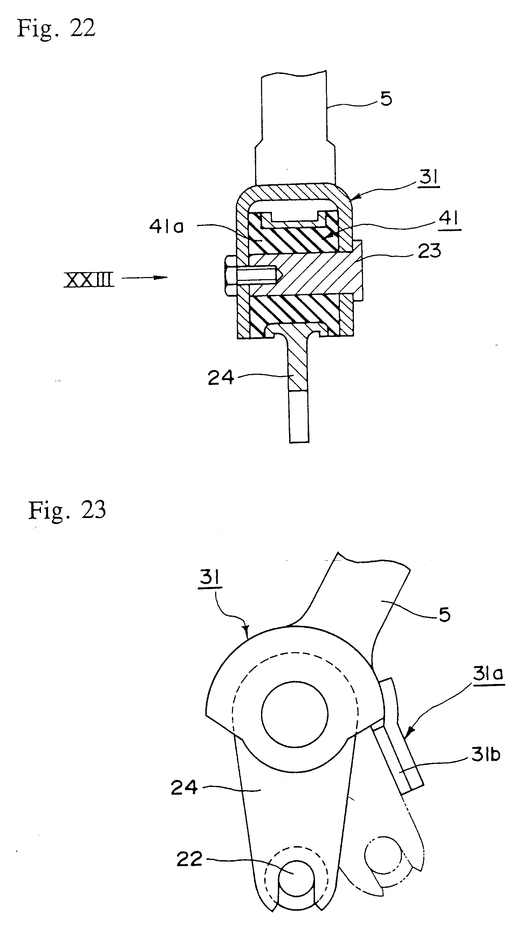

In recent years, the field of bicycle technology has been undergoing rapid development. Speeds of bicycles are approaching those of motor-cycles owing to developments of ultra light-weight frames and thin, high-pressure tires, and developments of multi-speed changers. In such high-speed bicycles, a shock felt by a rider when cycling on a rough road can become large, but the rider must endure such shock under existing circumstances. Accordingly, there has been strong demand to equip a bicycle with a suspension system. However, when a suspension system shown in Fig. 22 is adopted as it is, the above-mentioned problems (1) and (2) arise. Further, such problems as troublesome as maintenance and inspection arise. Moreover, there is a problem as described below. As reported by one of the inventors in the 1975 Spring Science Lecture meeting held by Automobile Technology Association; when a wheel 2 is about to get over a bump 4, not only a shock from below is given to the wheel 2 but a shock from the front, urging the wheel 2 rearwards is also given thereto. In the suspension system shown in Fig. 25 , however, the shock from below can be moderated but the shock from the front can not be moderated, so that its shock absorbing effect is not sufficient.

Furthermore, the danger arising from locking of a wheel during braking increases with an increase in the speed of a bicycle. For this reason, there has been a strong demand for measures for preventing the locking of wheels of bicycles.

FR 555161 shows a bicycle in which the frame is resiliently supported by inclined levers extending between respective axles of the wheels and respective lever fork ends, so that the wheels vibrate relative to the frame with a vertical component of motion.

This invention solves the above-mentioned problems. By providing a bicycle front wheel and a bicycle front wheel control mechanism which can generally satisfy the following conditions (A) to (E).
(A) Not only a shock from below but a shock from the front can be moderated when a bicycle travels over a bump on a road surface.
(B) A rider can pedal the bicycle with his full strength on a flat road surface without an accompanying vertical movement of the frame.
(C) There is scarcely a chance that a part of the kinetic energy produced by the rider is consumed by the suspension system.
(D) Locking of a wheel during braking can be resisted.
(E) The control mechanism has superior durability and requires no special maintenance and inspection.

This invention provides a bicycle front wheel and front wheel control mechanism, the control mechanism having a suspension system attached to a front fork of a bicycle to support a front wheel and a brake system for braking the front wheel,
the suspension system comprising an eccentric retainer formed into a crank shaft structure and composed of an axially central eccentric shaft and respective support shafts, arms holding the support shafts at respective axially outward ends of and in parallel with the eccentric shaft; the eccentric shaft being an axle of the front wheel;
characterised in that:
(i) the respective support shafts are supported by the front forks through respective elastic bodies perpendicularly above the eccentric shaft, the elastic bodies providing an elastic force for supporting the support shafts perpendicularly above the axle and giving a restoring force to a rocking motion around the support shafts arranged to act on the eccentric retainer by means of the elastic bodies;
(ii) the elastic force of the elastic body is restricted in the axial direction;
(iii) the suspension system has means for preventing the rocking motion relative to the front wheel with a distance between the support shaft and the eccentric shaft as its radius, from exceeding a range of specified limited rocking angles; and
(iv) the brake system is adapted to press braking surfaces provided on the front wheel by means of braking members secured to the front forks in an axial direction so as to exert a braking force; and in that the braking surfaces have such a radial width as always leaving a portion which faces on the braking member in the axial direction, even when the front wheel carries out the above rocking motion.

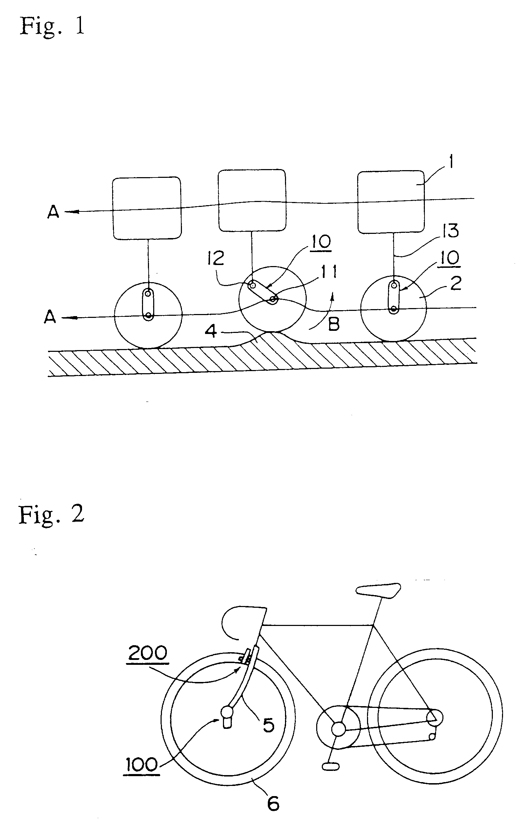

Fig. 1 is a view showing the working principle of a suspension system for bicycle front wheel control mechanism of this invention. 10 denotes an eccentric retainer of the suspension system, 11 denotes an eccentric shaft, 12 denotes a support shaft and 13 denotes a fork. An elastic body (not shown) is located between the support shaft 12 and the fork 13. As shown in Fig. 1, the elastic body is twisted by a shock given to a wheel 2 from the front. The wheel 2 rocks rearwards (in the direction of arrow B) around the support shaft 12 in an arcuate path of radius equal to the distance between the eccentric shaft 11 and the support shaft 12, thus allowing the wheel 2 to rise upwards, over a bump 4. Thereby, the shock given to the wheel 2 from the front is moderated. In addition, since the wheel 2 rocks rearwards so that it also moves upward, a shock given to the wheel 2 from below is also moderated. Namely, when the wheel 2 travels over the bump 4 on road surface, not only the shock from below but that from the front are moderated so that the shock absorbing effect can be developed satisfactorily. Moreover, since an elastic force of the elastic body located between the support shaft 12 and the fork 13 is restricted in the axial direction, a stability is improved when the wheel 2 snakes left or right.

As shown by both left and right states of Fig. 1, the support shaft 12 is held by the fork 13 through the elastic force generally vertically above the eccentric shaft 11. Namely, under ordinary conditions, the eccentric retainer 10 stands upright. For this reason, the body 1 scarcely moved in the vertical direction even when a rider pedals a bicycle with his full strength on a flat road surface.

When possibly over the bump 4, the wheel 2 rocks rearwardly. Thereafter, energy associated with forward motion of the wheel 2 to be accumulated in the elastic body is returned again to a rotation motion of the wheel 2. Consequently, a loss of running energy owing to working the suspension system is reduced by a large margin.

Braking is effected by sandwiching braking surfaces with pressure by means of the braking members. During braking, the wheel 2 rocks rearwardly in such a manner as described above. For this reason, the braking surface is applied with pressure by the braking member while moving in a radial direction relative to the braking member, so that the locking of the wheel 2 is prevented. Since the braking surfaces are in an approximately perpendicular disposition, no additional movement takes place in the braking lever during braking. Therefore, the braking can be effected well.

Over and above a conventional cycle, the suspension system comprises the eccentric retainer and the brake system has the braking surface which is only widened in the radial direction, so that the bicycle front wheel control mechanism of this invention is simple in its structure and easy in maintenance and inspection.
(1) The following effects can be obtained by the bicycle front wheel and front wheel control mechanism of claim 1.
   (i) When the front wheel passes over bumps on a road surface, the front wheel is pivoted rearwardly and also is moved upwardly by the function of the eccentric retainer. Accordingly, not only shocks given to the front wheel from below but also shocks from the front are moderated, so that the shock absorbing effect can be produced to a maximum extent.
      Further, since the shock given to the front wheel from the front during abrupt handlebar movements can also be moderated, the steering ability can be improved too.
   (ii) In an ordinary condition, the eccentric retainer can be maintained in or close to an upright disposition. Consequently, even when the rider pedals the bicycle with his full strength on a flat road surface, vertical movement is scarcely created in the bicycle frame so that the rider can pedal it with his full strength.
   (iii) The front wheel is adapted to move in the longitudinal direction when travelling over a bump. Therefore, the energy accumulated in the elastic body by the rocking motion of the front wheel is returned again to the rotation motion of the front wheel so as to minimize the loss of running energy by a large margin.
   (iv) The braking surface is adapted to be pressed by the braking member while moving in the radial direction relative to the braking member. Therefore experiments proved that no locking occurred in the front wheel 6.
   (v) The suspension system is composed of the eccentric retainer and the braking system is so constructed as to only widen the braking surface in the radial direction, so that the bicycle front wheel control mechanism of this invention is simple in its structure and easy in maintenance and inspection.
(2) According to the bicycle front wheel control mechanism of claim 2, the structure can be simplified.
(3) According to the bicycle front wheel control mechanism of claim 3, 4, 8, 10 or 12, the assembly construction can be simplified.
(4) According to the bicycle front wheel control mechanism of claim 5, 9, 11 or 13, the elastic force can be restricted securely since the assembly member is used.
(5) According to the bicycle front wheel control mechanism of claim 6, the elastic force can be restricted more securely since the flange is also held.
(6) According to the bicycle front wheel control mechanism of claim 7, the number of members for restricting the elastic force can be reduced.
(7) According to the bicycle front wheel control mechanism of claim 14, the structure of brake system can be simplified.
(8) According to the bicycle front wheel control mechanism of claim 15, the shock produced by collision of the front wheel against the crown of the front fork can be avoided.
(9) According to the bicycle front wheel control mechanism of claim 16, the rocking motion can be limited using the simple structure and without an accompanying the shock.
(10) According to the bicycle front wheel control mechanism of claim 17, the rocking motion can be limited using a simple structure without causing additional shock.

Embodiments of the invention will be described in detail, by way of example, with reference to the accompanying drawings in which:
Fig. 1 is a view showing the working principle of a suspension system for a bicycle front wheel control mechanism of this invention and has already been described;
Fig. 2. is a general schematic side view showing a bicycle equipped with a bicycle front wheel control mechanism according to a first embodiment of this invention;
Fig. 3 is an enlarged view of a suspension system of Fig. 2;
Fig. 4 is a sectional view taken on a line IV-IV of Fig. 3;
Fig. 5 is a view viewed in a direction of arrow V of Fig. 4;
Fig. 6 is an exploded oblique view showing a structure for carrying an elastic body and L-shaped member by a housing of the first embodiment
Fig. 7 is an enlarged side view showing a working state of a suspension system of the first embodiment;
Fig. 8 is a sectional view showing the configuration of a road surface on which the suspension system of the first embodiment was tested;
Fig. 9 is a diagram showing test results obtained by using a bicycle which is not equipped with the suspension system of the first embodiment, and shows "sprung acceleration";
Fig. 10 is a diagram showing test results obtained by using a bicycle which is not equipped with the suspensions system of the first embodiment, and shows "bending stress";
Fig. 11 is a diagram showing test results obtained by using a bicycle which is equipped with the suspension system of the first embodiment, and shows "spring acceleration;
Fig. 12 is a diagram showing test results obtained by using a bicycle which is equipped with the suspensions system of the first embodiment, and shows "bending stress";
Fig. 13 is a partially sectional front view showing a brake system of the first embodiment;
Fig. 14 is a side view showing the brake system of the first embodiment;
Fig. 15 is a partially sectional front view showing a comparison example of a brake system of the first embodiment;
Fig. 16 is a view showing a suspension system of a third embodiment and is a partial sectional view corresponding to Fig. 4;
Fig. 17 is a view showing a suspension system of a third embodiment and is a partial sectional view corresponding to Fig. 4;
Fig. 18 is a sectional view taken on line XVIII-XVIII of Fig. 17;
Fig. 19 is a view showing a suspensions system of a fourth embodiment and is a partial sectional view corresponding to Fig. 4;
Fig. 20 is a view showing a suspension system of a fifth embodiment and is a partial sectional view corresponding to Fig. 4;
Fig. 21 is a view in a direction of arrow XXI of Fig. 20;
Fig. 22 is a view showing a suspensions system of a sixth embodiment and is a partial sectional view corresponding to Fig. 4;
Fig. 23 is a view viewed in a direction of arrow XXIII of Fig. 22;
Fig. 24 is a view showing a suspensions system of a seventh embodiment and is a partial sectional view corresponding to Fig. 4; and
Fig. 25 is a view showing a working principle of a general conventional suspension system;

Fig. 2 is a general schematic side view showing a bicycle equipped with a bicycle front wheel control mechanism according to a first embodiment of this invention. 100 denotes a suspension system for suspending a front wheel 6 attached to a front fork 5, and 200 denotes a brake system for braking the front wheel 6.

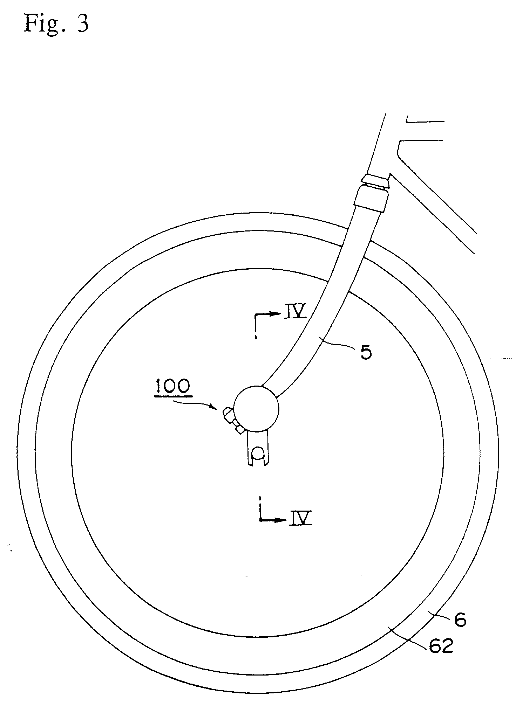

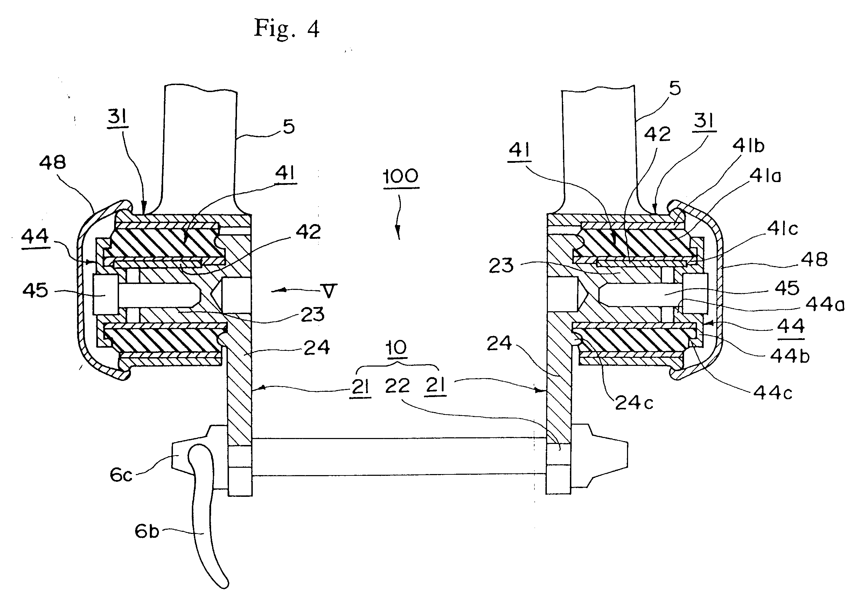

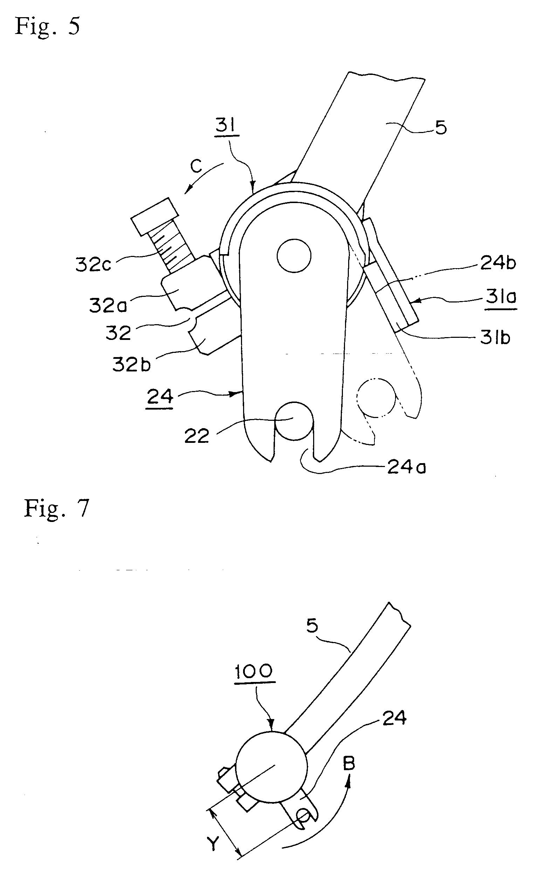

Fig. 3 is an enlarged view of the suspension system 100 of Fig. 2. Fig. 4 is a sectional view taken on a line IV-IV of Fig. 3. Fig. 5 is a view viewed in a direction of arrow V of Fig. 4. The suspension system 100 comprises an eccentric retainer 10, and the eccentric retainer 10 comprises two L-shaped members 21 and hollow axle (eccentric shafts) 22. A hub of the front wheel 6 is carried by the axle 22 through a ball bearing (not shown), and the front wheel 6 is adapted to rotate freely around the axle 22 (in a direction of arrow C of Fig. 5). The L-shaped member 21 is composed of a shaft portion (support shaft) 23 and a flat plate-like arm 24. A slot 24a (commonly called a "dropout") is formed at a bottom end of each arm 24, and the axle 22 is fitted in and secured by the respective slots 24a near both of its ends. The axle 22 is parallel with the shaft portion 23, and the arm 24 is perpendicular to the shaft portion 23. The axle 22 is secured firmly to the arm 24 by a cam device 6b and an adjusting nut 6c, commonly known as a quick-release mechanism.

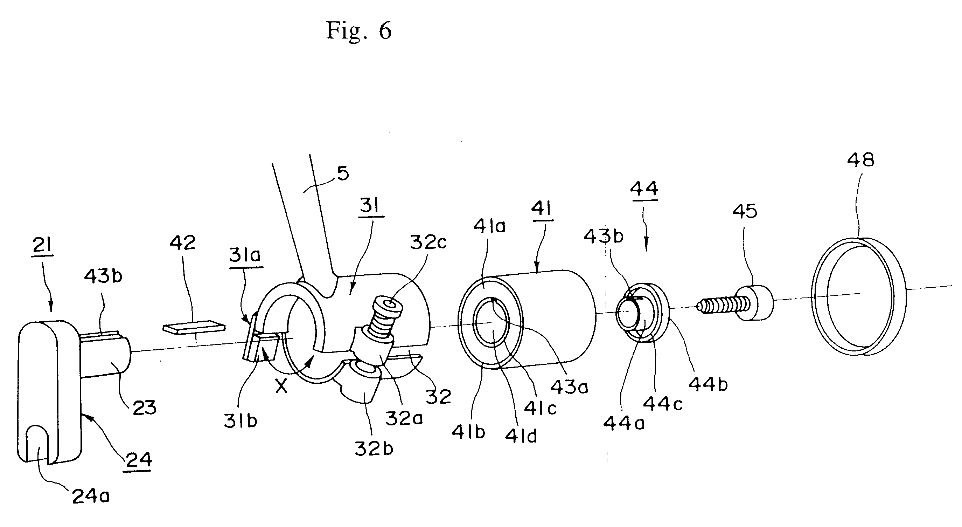

A housing 31 is formed at a tip end of the front fork 5, and an elastic body 41 and the shaft portion 23 of the L-shaped member 21 are carried in the housing 31. Fig. 6 is an exploded oblique view showing this carrying structure. The housing 31 is formed as an axially open cylinder (lateral direction of Fig. 4), having a slit 32 extending along its length so that it can be tightened around a cylindrical object therein. This tightening is achieved by means tightening bosses 32a and 32b, which are formed on an external surface of the housing 31 respectively on opposite sides of the slit. A screw 32c is used to draw the bosses 32a, 32b together, so as to reduce the width of the slit 32.

An elastic body 41 is cylindrical, and comprises a thick annular rubber member 41a and thin external and internal members 41b, 41c both made of metal secured to outer and inner radial surfaces of the member 41a. The member 41a permits neutral twisting within a specified angular range of the internal and external members 41b, 41c. The shaft portion 23 of the L-shaped member 21 is fitted within the bore 41d of the elastic body 41, and is prevented from rotating relative thereto by a key 42. The elastic body 41 is prevented from rotating with respect to the housing 31 i.e. around its axis by fastening the housing 31 through the slit 32. The key 42 is flat, a groove 43a in which the key 42 fits being formed on an internal surface of the internal member 41c, and a groove 43b in which the key 42 fits is formed on an external surface of the shaft portion 23.

44 denotes a cover having a cylindrical portion 44a fitting within the bore 41d. The cover 44 is so constructed that the cylindrical portion 44a is fitted into the bore 41d from a side opposite to the L-shaped member 21, and secured to the shaft portion 23 by a screw 45. Thus the L-shaped member 21 is secured to the elastic body 41 immovably in an axial direction by the cover 44 and the hexagon socket head screw 45. A groove 43b in which a base portion 42b of the key 42 fits is formed on the cylindrical portion 44a, and the cover 44 is prevented from rotating by the key 42 relative to the elastic body 41 and around its axis. The L-shaped member 21 is carried by the housing 31 in orientation where the arm 24 stands upright, by axial adjustment of the orientation in which the elastic body 41 is secured to the housing 31. Namely, the shaft portions 23 is located at a perpendicularly upper part of the axle 22. 48 denotes a cover which covers the housing 31 from a side opposite to the axle 22.

Further, a plate-like stop 31a is a member for limiting the rocking motion of the arm 24 to within a specified range X (Fig. 6). A rubber plate 31b is installed at a side of the stop 31a with which the arm 24 collides, and a part 24b of the arm 24 which collides with the rubber plate 31b is formed into a round shape.

In the suspension system 100 thus constructed, an assembly by which the housing 31 carries the L-shaped member 21 is executed in the following manner:

Firstly, the elastic body 41 is placed in the housing 31 while the slit 32 is in a loosened state, and then the slit 32 is tightened by the screw 32c to secure the elastic body 41. The key 42 is fitted into the groove 43b of the shaft portion 23, and this shaft portion 23 is then fitted into the bore 41d, the key 42 entering the groove 43a. Then, the cover 44 is secured to the shaft portion 23 by the screw 45.

A projecting portion 24c is formed on a part of the arm 24, the projecting portion 24c contacting with the body 41a of the elastic body 41. A projecting portion 44c is formed on a part of the cover portion 44b of the cover 44 the projecting portion 44c also contacting with the rubber member 41a. By this arrangement, the rubber member 41a of the elastic body 41 is compressed in its axial direction by the arm 24 and the cover 44 when it is assembled as described above. In other words, an elastic force of the elastic body 41 becomes restricted in its axial direction.

In the suspension system 100 thus constructed, the L-shaped member 21 remains in the condition where the arm 24 stands upright during such time as no shock is experienced by the front wheel 6 from either the under side or the front when the bicycle is running on a flat road surface. In other words, the suspension system 100 does not effect a shock-absorbing function when the bicycle is running on a flat road surface. Accordingly, the bicycle frame scarcely moves in the vertical direction even when the rider pedals the bicycle with his full strength, so that he can exert his full force to propel the bicycle.

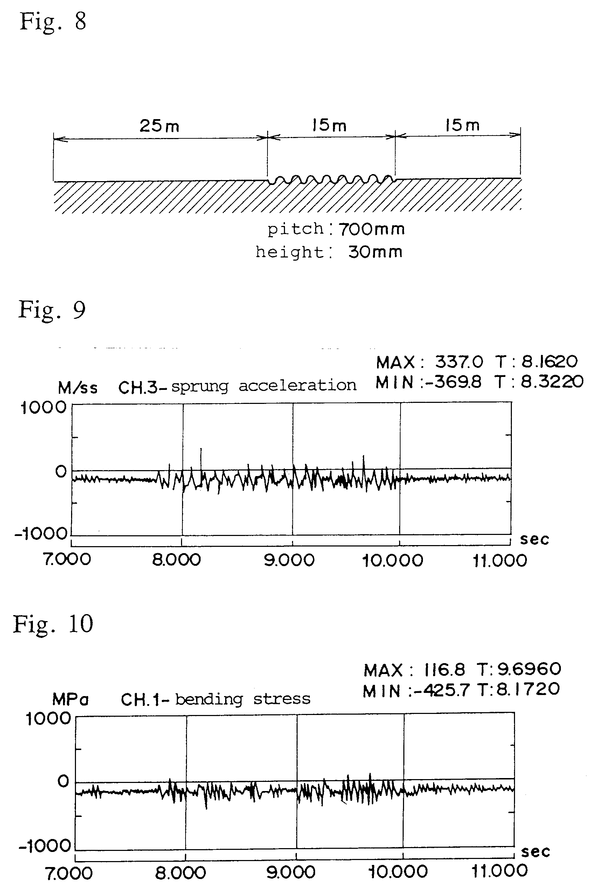

On the other hand, when the bicycle travels over the bump 4 (Fig. 1) of the road surface, shocks are given to the front wheel 6 from both below and the front. When the shock is given to the front wheel 6 from the front, the front wheel 6 rocks rearwardly (in the direction of arrow B) as shown in Fig. 7 by a specified angle around the shaft portion 23, with an axis distance Y between the shaft portion 23 and the axle 24 as its radius, while twisting the rubber member 41a of the elastic body 41. The shock from the front is relieved to the rear by this rocking motion. In addition, since the front wheel 6 rocks in this way so as to move upwardly too, the shock from below is relieved upwardly. As described above, the suspension system 100 satisfactorily moderates both the shocks given to the front wheel 6 from below and the front when the front wheel 6 travels over the bump 4 on road surface.

Further, a small shock may be given to the front wheel 6 from the front when the handlebars are turned abruptly in order, for example, to avoid some danger during running on a road surface. Even in this instance, the front wheel 6 rocks as described above so that the shock given from the front is relieved to the rear. In addition, the elastic force of the elastic body 41 is restricted in the axial direction so that the stability is improved when the front wheel 6 snakes left and right. Consequently, the shock from the front during turning of operating the handlebars is also moderated to provide a nimble handlebar operation so as to improve running quality of the bicycle.

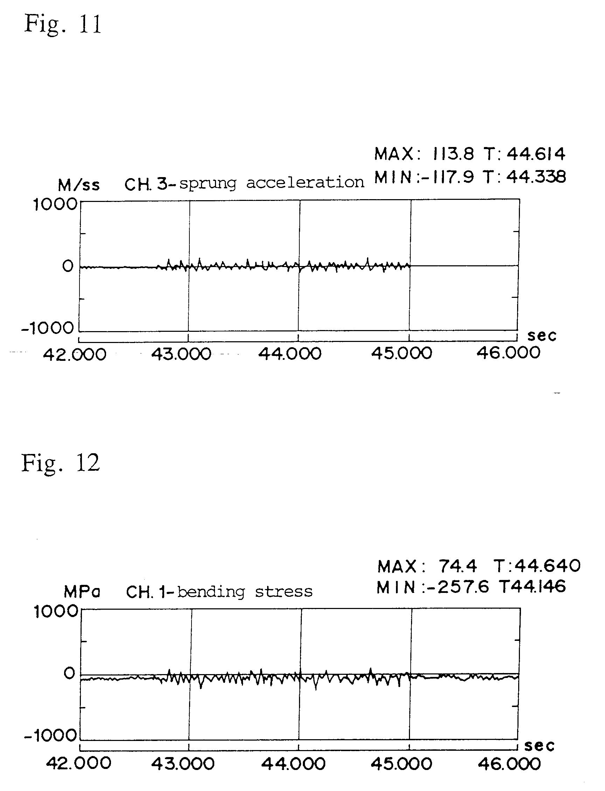

Fig. 8 to Fig. 12 are diagrams for indicating improvements in running quality. Fig. 8 shows a configuration of a road surface on which the bicycle runs. Fig. 9 and Fig. 10 show results obtained by using a bicycle which is not equipped with the suspension system 100 of this embodiment, and Fig. 11 and Fig. 12 show results obtained by using a bicycle of this embodiment. Fig. 9 and Fig. 11 show the "sprung acceleration" representing a degree of ride comfort, and Fig. 10 and Fig. 12 show the "bending stress" representing a force applied on the front fork. In both of these cases, this embodiment develops small values showing that it provides good running properties.

Moreover, when the front wheel 6 travels over the bump 4, the front wheel 6 rocks as described above to move rearwardly and then rocks in the opposite direction by a reaction of twisting to return forwards. For this reason, the energy accumulated in the elastic body 41 by the rocking motion of the front wheel 6 is returned to the rotating motion of the front wheel 6. Consequently, the loss of running energy is reduced by a large margin.

On the other hand, since the upward movement of the front wheel 6 becomes larger when the front wheel 6 rocks excessively, there is the possibility that the front wheel 6 makes contact with a crown (not shown) of the front fork 5. In the suspension system 100, however, the stop 31a is formed on the housing 31 so that the arm 24 of the L-shaped member 21 strikes against a rubber plate 31b of the stop 31a to control the above pivoting to within the range of X (Fig. 6), even when the front wheel 6 undergoes large rocking movements to the front and the rear as described above. The range X is limited to such an extent that the front wheel 6 does not strike against the crown even when the arm 24 rocks to a position where it strikes against the stop 31a. Therefore, when the front wheel 6 travels over the bump 4, there is not risk that the front wheel 6 might thrust up into the crown in the suspension system 100. In addition, shock caused by collision of the arm 24 with the stopper 31a is moderated by the rubber plate 31b and the rounded part 24b of the arm 24, so that the degree of ride comfort is maintained.

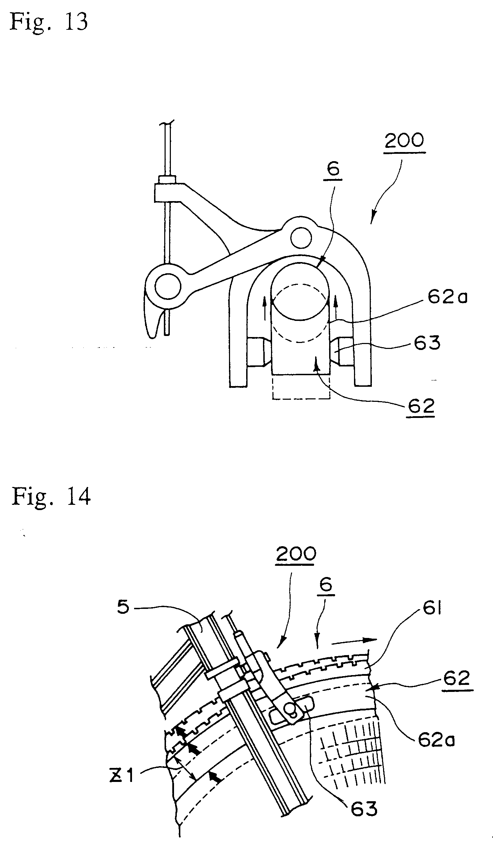

Fig. 13 and Fig. 14 are views showing a brake system 200. Fig. 13 is a partially sectional front view and Fig. 14 is a side view. The brake system 200 is so constructed that side surfaces (braking surfaces) 62a of a rim 62 disposed at an inner periphery of a tire 61 are held between and applied with pressure by brake shoes (braking members) 63 so as to be braked. When the front wheel 6 is braked, a shock from the front is applied to the front wheel 6 in the same way as when the front wheel 6 travels over the bump 4. However, this shock is relieved to the rear by the rocking motion of the front wheel 6 in the same way as when the front wheel 6 travels over the bump 4. In the brake system 200, the side surface 62a of the rim 62 is designed in such a way as to have a radial width Z1 (Fig. 14) which includes a portion always facing the brake shows 63 in an axial direction, even when the front wheel 6 rocks as described above to move in a radial direction relative to the brake shoe 63. Further, the side surface 62a is a perpendicular plane as shown by Fig. 13.

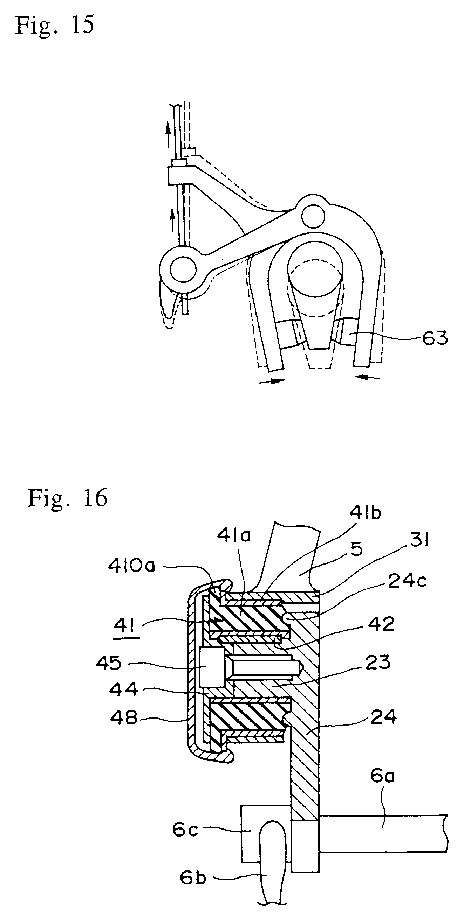

According to the brake system 200 thus constructed, since the front wheel 6 rocks as described above when braking is effected, the side surfaces 62a of the rim 62 are applied with pressure by the brake shoes 63 while moving in the radial direction relative to the brake shoes 63. For this reason, the front wheel 6 is prevented from being locked. In this instance, the side surface 62a of the rim 62 is formed wide in the radial direction as described above, so that the side surfaces 62a of the rim 62 are sandwiched between and applied with pressure by the brake shoes 63 securely. In addition, the side surface 62a is in a plane perpendicular to the axis of the wheel so that no additional movement takes place in the brake shoes 63 and their operating components. Therefore, the braking is effected well. Fig. 15 shows a case where an additional movement takes place in the braking member at time of braking because the braking surface inclines by a large margin relative to the perpendicular plane. The side surface 62a may incline relative to the perpendicular plane within a range from +10° to -10°, however, am angle of about 2° to 3° is preferable.

As compared with a conventional arrangement, the suspensions system 100 thus constructed additionally comprises the eccentric retainer 10. The brake system is modified only in that the side surface 62a of the rim 62 is widened in the radial direction. Therefore, the bicycle front wheel control mechanism of this embodiment is simple in its structure and easy in maintenance and inspection.

### (Second embodiment)

The suspension system of this embodiment is one which uses an elastic body 41 having a flange 410a as shown by Fig. 16. According to this embodiment, the elastic force of the elastic body 41 is securely restricted in the axial direction because the flange 410a is also held in the axial direction.

### (Third embodiment)

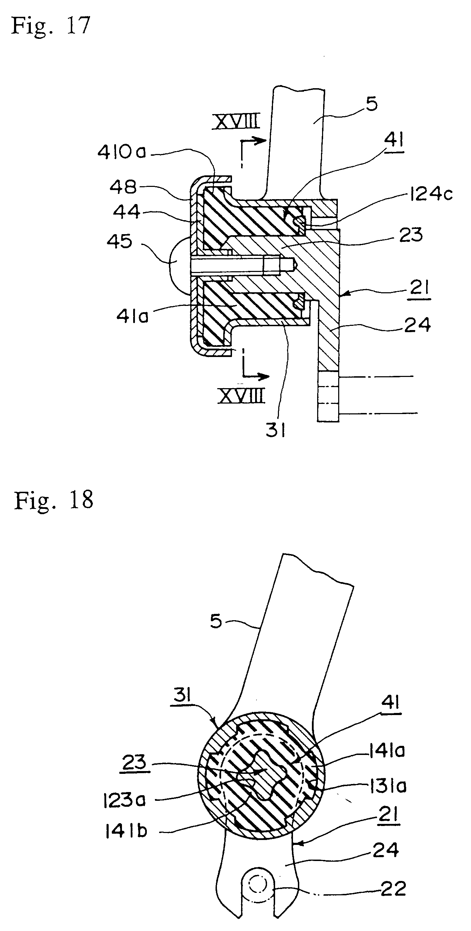

The suspension system of this embodiment uses an elastic body 41 comprising only of the rubber member 41a as shown by Fig. 17 and Fig. 18 (which is the sectional view taken on the line XVIII-XVIII of Fig. 17). A convex portion 141a at an external surface is arranged to fit in a concave portion 131a at internal surface of the housing 31 so that the elastic body 41 is secured to the housing 31 so as not to rotate relative to it and around its axis. A convex portion 141b at an internal surface is arranged to fit in a concave portion 123a at an external surface of the shaft portion 23 so that the elastic body 41 is secured to the shaft portion 23 so as not to rotate relative to it and around its axis. 124c is a ring body and is constructed with the projecting portion 24c of the first embodiment which is formed as a member other than the arm 24.

In the suspension system having the above structure, a simple cylindrical housing 31 is used for supporting the elastic body 41 and the L-shaped member 21 to the housing 31. Only material consisting of the rubber member 41a is used for the elastic body 41, and the key 42 of the first embodiment is not necessary. Therefore, the suspension system of this embodiment has such merits that its structure is simper and its cost is lower as compared with those of the suspension system of the first embodiment. Fundamental functions and effects as the suspension system are same with those of the suspension system of the first embodiment.

### (Fourth embodiment)

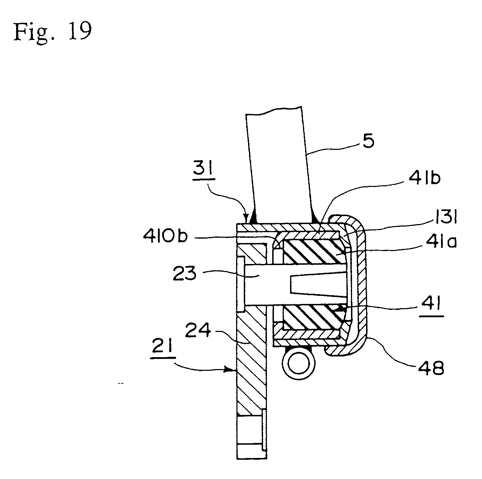

The suspension system of this embodiment uses the elastic body 41 comprising the rubber member 41a and an external surface member 41b as shown by Fig.19. An opening of the housing 31 is formed by drawing as illustrated by a part 131 so as to hold the elastic body 41 between it and a flange 410b of the external surface member 41b. Thereby, the elastic force is restricted in the axial direction.

### (Fifth embodiment)

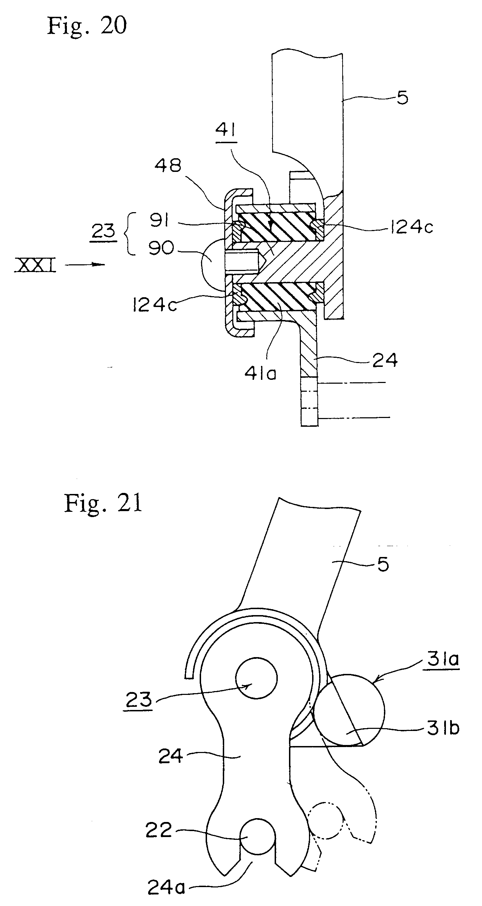

In the suspension system of this embodiment, the elastic body 21 consisting only of the rubber member 41a is incorporated in an upper end of the arm 24 so as to prevent rotation relative to the arm 24 around its axis, as shown by Fig. 20. The arm 24 is secured and supported to the front fork 5 in a cantilever structure by the shaft portion 23 (bolt 90 and projecting portion 91) piercing the elastic body 41 in the axial direction. The elastic body 41 is held between the front fork 5 and the cover 48 through ring bodies 124c, similar to those of the third embodiment, and the elastic force is thereby restricted in the axial direction. Fig. 21 is a view in a direction of arrow XXI of Fig. 20. The stop 31a and the rubber plate 31b being installed at tip end of the front fork 5 in the same way as the first embodiment.

### (Sixth embodiment)

In the suspension system of this embodiment, the elastic body 41 consisting only of the rubber member 41a is incorporated in an upper end of the arm 24 so as not to rotate relative to the arm 24 and around its axis, as shown by Fig. 22. The housing 31, which houses the upper end of the arm 24 and opens toward downside and formed into a forked-shape, is formed at tip end of the front fork 5. The arm 24 is secured to and supported by both axial side surfaces of the housing 31 in a double-support structure by the shaft portion 23 piercing the elastic body 41 in the axial direction. The elastic body 41 is restricted in its elastic force in the axial direction by tightening the housing 31 from both axial sides. Fig. 23 is a view viewed in a direction of arrow XXIII of Fig. 22. The stop 31a and the rubber plate 31b are installed at tip end of the front fork 5 in the same way as the first embodiment.

### (Seventh embodiment)

In the suspensions system of this embodiment, the elastic body 41 consisting only of the rubber member 41a is incorporated at the top end of the front fork 5 as shown by Fig. 24. An upper end of the arm 24 is formed into a forked portion 124. The elastic body 41 is held by the forked portion 124 in the axial direction and the shaft portion 23 passes through the forked portion 124 and the elastic body 41, so that the arm 24 is secured and supported to the front fork 5. The elastic body 41 is restricted in its elastic force in the axial direction by tightening the forked portion 124 of the arm 24 from both sides in the axial direction.

The following technical factors may be added to the foregoing embodiments.
(1) An elastic body having a proper spring characteristic is to be used. Since a spring characteristic of the elastic body has an influence on a ride comfort, it is desirable to provide the elastic body with a proper spring characteristic according to running conditions of bicycle. Suitably a spring characteristic may be used, which has a low stiffness at low deflection but then increases gradually and quickly as deflections increases. The rubber member may be replaced by a number of suitable alternative elastomeric material.
(2) When the stationary state position of the eccentric retainer is located a little rearwardly from the perpendicular position, the suspension system becomes more easily deflected with an effect as if the elastic body is softened. However, the vertical movement of bicycle frame is more likely to occur when it is pedalled with full strength. The inclining angle of the eccentric retainer at its stationary state may be adjusted by a spline shown in Fig. 18.
(3) As is generally know, performance of the suspension system can be improved by introducing a damping force of an oil damper or friction force.
(4) A recess may be made on the rim to facilitate supply of air to the tire. In a tubular rim of 700C-size for example, when a rim height is large, the length of valve projecting from the rim becomes small with the result that it is not easy to supply air. However, this problem can be solved by forming the rim with such a structure.
(5) Weight transfer onto the front fork is large during abrupt braking, the load applied to the rear wheel is reduced so that it becomes more prone to locking. In order to reduce this tendency, well-known countermeasures to adjust the braking force may be taken such as restricting load transfer to the front wheel or reducing friction coefficient of brake shoe at the rear wheel.
(6) Design changes of the arm 24 and other parts are possible in order to accomplish a reduction in weight etc.

## Claims

1. A bicycle front wheel and front wheel control mechanism, the control mechanism having a suspension system (100) attached to a front fork (5) of a bicycle to support a front wheel (6) and a brake system (200) for braking the front wheel (6),
the suspension system comprising an eccentric retainer (10) formed into a crank shaft structure and composed of an axially central eccentric shaft (22) and respective support shafts (23), arms (24) holding the support shafts (23) at respective axially outward ends of and in parallel with the eccentric shaft (22); the eccentric shaft (22) being an axle (22) of the front wheel (6);
characterised in that:
(i) the respective support shafts (23) are supported by the front forks (5) through respective elastic bodies (41) perpendicularly above the eccentric shaft (22), the elastic bodies (41) providing an elastic force for supporting the support shafts (23) perpendicularly above the axle (22) and giving a restoring force to a rocking motion around the support shafts (23) arranged to act on the eccentric retainer (10) by means of the elastic bodies (41);
(ii) the elastic force of the elastic body (41) is restricted in the axial direction;
(iii) the suspension system (100) has means for preventing the rocking motion relative to the front wheel (6) with a distance between the support shaft (23) and the eccentric shaft (22) as its radius, from exceeding a range of specified limited rocking angles; and
(iv) the brake system (200) is adapted to press braking surfaces (62a) provided on the front wheel (6) by means of braking members (63) secured to the front forks (5) in an axial direction so as to exert a braking force; and in that the braking surfaces (62a) have such a radial width as always leaving a portion which faces on the braking member (63) in the axial direction, even when the front wheel (6) carries out the above rocking motion.

2. A bicycle front wheel and front wheel control mechanism according to claim 1, in which the eccentric retainer (10) comprises a rod body constituting the eccentric shaft (22) and two L-shaped members (21), composed of the respective support shaft (23) and the respective arm (24), the rod body is fitted in and secured to a groove at a lower end of the arm at both ends, and the eccentric retainer (10) is supported by a front fork at the shaft portion of the L-shaped member.

3. A bicycle front wheel and front wheel control mechanism according to claim 2, in which a cylindrical housing (31) opening in an axial direction is formed at a tip end of the front fork (5), the support shaft (23) is carried in the housing (31) through a cylindrical elastic body (41), the housing (31) is provided with a slit (32), so that it can be fastened, and the elastic body (41) is locked unrotatably to the housing (31) by fastening the housing (31) and further locked unrotatably to the support shaft by inserting the key (42) between it and the support shaft.

4. A bicycle front wheel and front wheel control mechanism according to claim 2, in which a cylindrical housing (31) opening in an axial direction is formed at a tip end of the front fork (5), the support shaft (23) of the L-shaped member (21) is carried in the housing (31) through a cylindrical elastic body (41), the elastic body (41) is locked unrotatably to the housing (31) by fitting a corrugated portion formed on its outer peripheral surface in a corrugated portion formed on an inner peripheral surface of the housing (31) and further locked unrotatably to the support shaft by fitting a corrugated portion formed on its inner peripheral surface in a corrugated portion formed on an outer peripheral surface of the support shaft portion.

5. A bicycle front wheel and front wheel control mechanism according to claim 3 or claim 4, in which the elastic body (41) is restricted in its elastic force in an axial direction by being held between the arm of the L-shaped member and a cover member (48) in the axial direction.

6. A bicycle front wheel and front wheel control mechanism according to claim 5, in which the elastic body has a flange (410a) and this flange (410a) is also held in the axial direction.

7. A bicycle front wheel and front wheel control mechanism according to claim 5, in which an opening end of the housing (31) opposite to the L-shaped member (21) is formed by drawing so that the elastic body is compressed in an axial direction and its elastic force is restricted in the axial direction.

8. A bicycle front wheel and front wheel control mechanism according to claim 1, in which the arms (24) of the eccentric retainer (10) are perpendicular to the eccentric shaft and at respective ends thereof, the eccentric shaft is at its both ends fitted in and secured to a grove formed at a lower end of the respective arm (24), the elastic body (41) is incorporated in the upper end portion of the respective arm (24) so that it can not rotate around an axis of the arm, the arm is secured and supported to the front fork in a cantilever structure by the shaft body piercing the elastic body in an axial direction, and the elastic body is adapted to be irrotational around an axis of the shaft body.

9. A bicycle front wheel and front wheel control mechanism according to claim 8, in which the elastic body is restricted in its elastic force in the axial direction by being held between the front fork and a cover member in the axial direction.

10. A bicycle front wheel and front wheel control mechanism according to claim 1, in which the arms (24) of eccentric retainer (10) are perpendicular to the eccentric shaft (22) and at respective ends there of, the eccentric shaft is at its both ends fitted in and secured to a groove formed at a lower end of the respective arm (24), the elastic body (41) is incorporated in the upper end of the respective arm (24) so as not to rotate relative to the arm (24) and around its axis, a housing (31) which houses the upper end of the arm (24) and opens toward downside and formed into a forked-shape, is formed at tip end of the front fork (5), the arm (24) is secured to and supported by axially spaced side surfaces of the housing(31)to form an inboard structure through means of the shaft body piercing through the elastic body (41) in an axial direction, and the elastic body (41) is adapted to be irrotational around an axis of the shaft body.

11. A bicycle front wheel and front wheel control mechanism according to claim 10, in which the elastic body (41) is restricted in its elastic force by tightening the housing (31) from both axial sides.

12. A bicycle front wheel and front wheel control mechanism according to claim 1, in which the elastic body (41) is incorporated in tip end of the front fork (5), the arms (24) of the eccentric retainer (10) are perpendicular to the eccentric shaft and at respective ends thereof, an upper end of the arm (24) is formed into a forked portion, and the elastic body (41) is held by the forked portion in the axial direction and the shaft portion is made pierce the forked portion and the elastic body, so that the arm (24) is secured and supported to the front fork (5).

13. A bicycle front wheel and front wheel control mechanism according to claim 12, in which the elastic body (41) is restricted in its elastic force by tightening the forked portion of the arm from both axial sides.

14. A bicycle front wheel and front wheel control mechanism according to claim 1, in which a side surface (62a) of a rim (62) constitutes the braking surface and a brake shoe (63) constitutes the braking member.

15. A bicycle front wheel and front wheel control mechanism according to claim 1, in which the specified rocking angle range to which the rocking motion is limited is a range such that the front wheel (6) does not thrust up a crown of the front fork (5).

16. A bicycle front wheel and front wheel control mechanism according to claim 2, in which a stop (31a) against which the arm (24) of the eccentric retainer (10) collides is installed at tip end of the front fork (5), for the purpose of limiting the rocking motion, and a rubber member (31b) is installed at side of the stop (31a) against which the collision occurs.

17. A bicycle front wheel and front wheel control mechanism according to in claim 16, in which a part of the arm (24) colliding with the stop (31a) is formed into a round-shape.

## Patentansprüche

1. Fahrrad-Vorderrad und -Vorderradsteuermechanismus, wobei der Steuermechanismus ein Aufhängungssystem (100) aufweist, das derart an einer Vorder-Gabel (5) des Fahrrads befestigt ist, daß es ein Vorderrad (6) und ein Bremssystem (200) zum Bremsen des Vorderrades (6) hält,
wobei das Aufhängungssystem ein exzentrisches Halteteil (10) aufweist, das in einer Kurbeiwellenstruktur ausgebildet ist und aus einer axial zentralen exzentrischen Nabe (22) und jeweiligen Haltewellen (23) und Armen (24) besteht, die die Haltewellen (23) an jeweiligen axial auswärtsgereichteten Enden der exzentrischen Nabe (22) sowie parallel zu dieser halten; wobei die exzentrische Nabe (22) eine Achse (22) des Vorderrades (6) ist;
dadurch gekennzeichnet, daß:
(i) die jeweiligen Haltewellen (23) von den Vorder-Gabeln (5) durch jeweilige elastische Körper (41) senkrecht über der exzentrischen Nabe (22) gehalten sind, wobei die elastischen Körper (41) eine elastische Kraft erzeugen, um die Haltewellen (23) senkrecht über der Achse (22) zu halten und um eine Rückstellkraft für eine hin- und hergehende Schwingbewegung um die Haltewellen (23) zu erzeugen, die dazu dienen, mittels der elastischen Körper (41) auf das exzentrische Halteteil (10) einzuwirken;
(ii) die elastische Kraft des elastischen Körpers (41) in Axialrichtung beschränkt ist;
(iii) das Aufhängungssystem (100) eine Einrichtung aufweist, um zu verhindern, daß die relativ zu dem Vorderrad (6) erfolgende Schwingbewegung, deren Radius der Abstand zwischen der Haltewelle (23) und der exzentrischen Nabe (22) ist, einen Bereich von bestimmten begrenzten Schwingwinkeln überschreitet; und
(iv) das Bremssystem (200) in der Lage ist, an dem Vorderrad (6) vorgesehene Bremsflächen (62a) durch an den Vorder-Gabeln (5) befestigte Bremsteile (63) in eine axiale Richtung zu drücken, um eine Bremskraft auszuüben; und daß die Bremsflächen (62a) eine derartige radiale Breite aufweisen, daß stets ein Bereich verbleibt, der in der axialen Richtung dem Bremsteil (63) gegenüberliegt, und zwar selbst dann, wenn das Vorderrad (6) die erwähnte Schwingbewegung ausführt.

2. Fahrrad-Vorderrad und -Vorderradsteuermechanismus nach Anspruch 1, bei dem das exzentrische Halteteil (10) ein Achsgehäuse, das die exzentrische Nabe (22) bildet, und zwei L-förmige Teile (21) aufweist, die aus der jeweiligen Haltewelle (23) und dem jeweiligen Arm (24) bestehen, der Stangenkörper an beiden Enden in eine an einem unteren Ende des Arms ausgebildete Nut eingepaßt und an dieser befestigt ist, und das exzentrische Halteteil (10) von einer Vorder-Gabel an dem Wellenabschnitt des L-förmigen Teils gehalten ist.

3. Fahrrad-Vorderrad und -Vorderradsteuermechanismus nach Anspruch 2, bei dem an einem freien Ende der Vorder-Gabel (5) ein in einer axialen Richtung offenes zylindrisches Gehäuse (31) ausgebildet ist, die Haltewelle (23) durch einen zylindrischen elastischen Körper (41) in dem Gehäuse (31) gehalten ist, das Gehäuse (31) einen Schlitz (32) aufweist, so daß es befestigt werden kann, und der elastische Körper (41) durch Befestigung des Gehäuses (31) drehfest an dem Gehäuse (31) befestigt ist und ferner drehfest an der Haltewelle befestigt ist, indem ein Stift (42) zwischen den elastischen Körper (41) und die Haltewelle eingeführt ist.

4. Fahrrad-Vorderrad und -Vorderradsteuermechanismus nach Anspruch 2, bei dem an einem Ende der Vorder-Gabel (5) ein in einer axialen Richtung offenes zylindrisches Gehäuse (31) ausgebildet ist, die Haltewelle (23) des L-förmigen Teils (21) durch einen zylindrischen elastischen Körper (41) in dem Gehäuse (31) gehalten ist, der elastische Körper (41) drehfest an dem Gehäuse (31) befestigt ist, indem ein an seiner Außenumfangsfläche ausgebildeter gerippter Teil in einen an einer Innenumfangsfläche des Gehäuses (31) ausgebildeten gerippten Teil eingepaßt ist, und ferner drehfest an der Haltewelle befestigt ist, indem ein an seiner Innenumfangsfläche ausgebildeter gerippter Teil in einen an einer Außenumfangsfläche des Haltewellenabschnitts ausgebildeten gerippten Teil eingepaßt ist.

5. Fahrrad-Vorderrad und -Vorderradsteuermechanismus nach Anspruch 3 oder Anspruch 4, bei dem die elastische Kraft des elastischen Körpers (41) in einer axialen Richtung eingeschränkt ist, indem der elastische Körper (41) in der axialen Richtung zwischen dem Arm des L-förmigen Teils und einem Abdeckteil (48) gehalten ist.

6. Fahrrad-Vorderrad und -Vorderradsteuermechanismus nach Anspruch 5, bei dem der elastische Körper einen Flansch (410a) aufweist und auch dieser Flansch (410a) in der axialen Richtung gehalten ist.

7. Fahrrad-Vorderrad und -Vorderradsteuermechanismus nach Anspruch 5, bei dem ein dem L-förmigen Teil (21) gegenüberliegendes geöffnetes Ende des Gehäuses (31) mittels eines Ziehvorgangs derart ausgebildet ist, daß der elastische Körper in einer axialen Richtung zusammengedrückt ist und seine elastische Kraft in der axialen Richtung eingeschränkt ist.

8. Fahrrad-Vorderrad und -Vorderradsteuermechanismus nach Anspruch 1, bei dem die Arme (24) des exzentrischen Halteteils (10) senkrecht zu der exzentrischen Nabe verlaufen und an den betreffenden Enden der Arme die exzentrische Nabe mit ihren beiden Enden in eine an einem unteren Ende des Arms (24) ausgebildete Nut eingepaßt und an dieser befestigt ist, wobei der elastische Körper (41) derart in den oberen Endbereich des jeweiligen Arms (24) eingefügt ist, daß er sich nicht um eine Achse des Arms drehen kann, der Arm in einer Kantilever-Struktur an der Vorder- Gabel befestigt und gehalten ist, indem der stangenförmige Wellenkörper in einer axialen Richtung durch den elastischen Körper verläuft, und der elastische Körper gegen Drehung um eine Achse des Wellenkörpers befestigt werden kann.

9. Fahrrad-Vorderrad und -Vorderradsteuermechanismus nach Anspruch 8, bei dem die elastische Kraft des elastischen Körpers (41) in der axialen Richtung eingeschränkt ist, indem der elastische Körper (41) in der axialen Richtung zwischen der Vorder-Gabel und einem Abdeckteil gehalten ist.

10. Fahrrad-Vorderrad und -Vorderradsteuermechanismus nach Anspruch 1, bei dem die Arme (24) des exzentrischen Halteteils (10) senkrecht zu der exzentrischen Nabe (22) verlaufen und an den jeweiligen Enden der Arme (24) die exzentrische Nabe an ihren beiden Enden in eine an einem unteren Ende des jeweiligen Arms (24) ausgebildete Nut eingepaßt und in dieser befestigt ist, wobei der elastische Körper (41) derart von dem oberen Ende des jeweiligen Arms (24) aufgenommen ist, daß er sich nicht relativ zu dem Arm (24) und um seine Achse drehen kann, und an einem Ende der Vorder-Gabel (5) ein Gehäuse (31) vorgesehen ist, das das obere Ende des Arms (24) enthält, nach unten hin offen ist und in einer Gabelform ausgebildet ist, der Arm (24) an axial beabstandeten Seitenflächen des Gehäuses (31) befestigt und von diesen gehalten ist, derart, daß eine Innenstruktur gebildet wird, indem der Wellenkörper in einer axialen Richtung durch den elastischen Körper (41) hindurchtritt, und der elastische Körper (41) gegen Drehung um eine Achse des Wellenkörpers befestigt werden kann.

11. Fahrrad-Vorderrad und -Vorderradsteuermechanismus nach Anspruch 10, bei dem die elastische Kraft des elastischen Körpers (41) eingeschränkt ist, indem das Gehäuse (31) von beiden axialen Seiten her komprimiert ist.

12. Fahrrad-Vorderrad und -Vorderradsteuermechanismus nach Anspruch 1, bei dem der elastischen Körper (41) in das freie Ende der Vorder-Gabel (5) integriert ist, die Arme (24) des exzentrischen Halteteils (10) senkrecht zu der exzentrischen Nabe verlaufen und an deren jeweiligen Enden ein oberes Ende des Arms (24) als gegabeltes Teil ausgebildet ist, und der elastische Körper (41) von dem gegabelten Teil in der Axialrichtung gehalten ist und das Wellenteil durch das gegabelte Teil und den elastischen Körper verläuft, derart, daß der Arm (24) an der Vorder-Gabel (5) befestigt und von dieser gehalten ist.

13. Fahrrad-Vorderrad und -Vorderradsteuermechanismus nach Anspruch 12, bei dem die elastische Kraft des elastischen Körpers (41) eingeschränkt ist, indem der abstehende Teil des Armes von beiden axialen Seiten her komprimiert ist.

14. Fahrrad-Vorderrad und -Vorderradsteuermechanismus nach Anspruch 1, bei dem eine Seitenfläche (62a) einer Felge (62) die Bremsfläche bildet und ein Bremsschuh (63) das Bremsteil bildet.

15. Fahrrad-Vorderrad und -Vorderradsteuermechanismus nach Anspruch 1, bei dem der bestimmte Schwingwinkel-Bereich, auf den der Schwingwinkel begrenzt ist, derart bemessen ist, daß das Vorderrad (6) nicht in der Lage ist, ein Querjoch der Vorder-Gabel (5) hochzustoßen.

16. Fahrrad-Vorderrad und -Vorderradsteuermechanismus nach Anspruch 2, bei dem am Ende der Vorder-Gabel (5) ein Anschlag (31a) angeordnet ist, gegen den der Arm (24) des exzentrischen Halteteils (10) kollidiert, um die Schwingbewegung zu begrenzen, und auf der Seite des Anschlags (31a), auf der die Kollision erfolgt, ein Gummiteil (31b) montiert ist.

17. Fahrrad-Vorderrad und -Vorderradsteuermechanismus nach Anspruch 16, bei dem ein an den Anschlag (31a) anstoßender Teil des Arms (24) eine runde Form aufweist.

## Revendications

1. Roue avant de bicyclette et mécanisme de commande de celle-ci, ce mécanisme de commande ayant un système de suspension (100) fixé à la fourche avant (5) de la bicyclette pour supporter la roue avant (6) et un système de freinage (200) pour le freinage de la roue avant (6),
le système de suspension comprenant un dispositif de retenue exentrique (10) en forme de vilebrequin et composé d'un arbre central excentrique axialement (22) et d'arbres supports respectifs (23), des bras (24) tenant les arbres supports (23) aux extrémités respectives extérieures axialement de l'arbre excentrique (22) et parallèlement à celui-ci, l'arbre excentrique (22) étant un essieu (22) de la roue avant (6),
caractérisée par le fait que
(i) les arbres supports respectifs (23) sont supportés par la fourche avant (5) par l'intermédiaire de corps élastiques respectifs (41) perpendiculairement au-dessus de l'arbre excentrique (22), ces corps élastiques (41) produisant une force élastique pour le support des arbres supports (23) perpendiculairement au-dessus de l'essieu (22) et donnant une force de rappel à un mouvement de bascule autour des arbres supports (23) disposés pour agir sur le dispositif de retenue excentrique (10) au moyen des corps élastiques (41),
(ii) la force élastique des corps élastiques (41) est limitée dans la direction axiale,
(iii) le système de suspension (100) a des moyens destinés à empêcher le mouvement de bascule, par rapport à la roue avant (6) avec comme rayon la distance entre l'arbre support (23) et l'arbre excentrique (22), de dépasser un domaine d'angles de basculement limités spécifiés, et
(iv) le système de freinage (200) est agencé pour presser des surfaces de freinage (62a) prévues sur la roue avant (6) au moyen d'éléments freinants (63) fixés à la fourche avant (5) dans la direction axiale afin d'exercer une force de freinage,
et les surfaces de freinage (62a) ont une largeur radiale qui laisse toujours une partie qui regarde l'élément de freinage (63) dans la direction axiale, même lorsque la roue avant (6) exécute le mouvement de bascule ci-dessus.

2. Roue avant de bicyclette et mécanisme de commande de celle-ci selon la revendication 1, dans lesquels le dispositif de retenue excentrique (10) comprend un corps de tige constituant l'arbre excentrique (22) et deux éléments en forme de L (21), composés de l'arbre support respectif (23) et du bras respectif (24), le corps de tige est monté dans une rainure à l'extrémité inférieure du bras aux deux extrémités et fixé à cette rainure, et le dispositif de retenue excentrique (10) est supporté par une fourche avant à la partie arbre de l'élément en forme de L.

3. Roue avant de bicyclette et mécanisme de commande de celle-ci selon la revendication 2, dans lesquels un boîtier cylindrique (31) ouvert dans la direction axiale est formé à une extrémité de la fourche avant (5), l'arbre support (23) est supporté dans ce boîtier (31) par l'intermédiaire d'un corps élastique cylindrique (41), le boîtier (31) est pourvu d'une fente (32) afin de pouvoir être fixé, et le corps élastique (41) est verrouillé, de façon à ne pas pouvoir tourner, au boîtier (31) par fixation du boîtier (31) et en outre verrouillé, de façon à ne pas pouvoir tourner, à l'arbre support par engagement d'une clavette (42) entre lui et l'arbre support.

4. Roue avant de bicyclette et mécanisme de commande de celle-ci selon la revendication 2, dans lesquels un boîtier cylindrique (31) ouvert dans la direction axiale est formé à une extrémité de la fourche avant (5), l'arbre support (23) de l'élément en forme de L (21) est supporté dans ce boîtier (31) par l'intermédiaire d'un corps élastique cylindrique (41), ce corps élastique (41) est verrouillé de façon à ne pas pouvoir tourner au boîtier (31) par engagement d'une partie cannelée formée sur sa surface périphérique extérieure dans une partie cannelée formée sur une surface périphérique intérieure du boîtier (31) et en outre verrouillé, de façon à ne pas pouvoir tourner, à l'arbre support par engagement d'une partie cannelée formée sur sa surface périphérique intérieure dans une partie cannelée formée sur un surface périphérique extérieure de la partie arbre support.

5. Roue avant de bicyclette et mécanisme de commande de celle-ci selon l'une des revendications 3 et 4, dans lesquels le corps élastique (41) est limité dans sa force élastique dans la direction axiale en étant tenu entre le bras de l'élément en forme de L et un couvercle (48) dans la direction axiale.

6. Roue avant de bicyclette et mécanisme de commande de celle-ci selon la revendication 5, dans lesquels le corps élastique a une bride (410a) et cette bride (410a) est aussi tenue dans la direction axiale.

7. Roue avant de bicyclette et mécanisme de commande de celle-ci selon la revendication 5, dans lesquels une extrémité ouverte du boîtier (31) opposée à l'élément en forme de L (21) est formée par étirage de façon que le corps élastique soit comprimé dans la direction axiale et sa force élastique soit limitée dans cette direction.

8. Roue avant de bicyclette et mécanisme de commande de celle-ci selon la revendication 1, dans lesquels les bras (24) du dispositif de retenue excentrique (10) sont perpendiculaires à l'arbre excentrique et situés aux extrémités respectives de celui-ci, l'arbre excentrique est, à ses deux extrémités, monté dans une rainure formée à l'extrémité inférieure du bras respectif (24) et fixé à cette rainure, le corps élastique (41) est monté dans la partie d'extrémité supérieure du bras respectif (24) de façon qu'il ne puisse pas tourner autour de l'axe du bras, le bras est fixé à et supporté par la fourche avant dans une structure en porte-à-faux par le corps d'arbre perçant le corps élastique dans la direction axiale, et le corps élastique est fait pour ne pas tourner autour de l'axe du corps d'arbre.

9. Roue avant de bicyclette et mécanisme de commande de celle-ci selon la revendication 8, dans lesquels le corps élastique est limité dans sa force élastique dans la direction axiale en étant tenu entre la fourche avant et un couvercle dans la direction axiale.

10. Roue avant de bicyclette et mécanisme de commande de celle-ci selon la revendication 1, dans lesquels les bras (24) du dispositif de retenue excentrique (10) sont perpendiculaires à l'arbre excentrique (22) et situés aux extrémités respectives de celui-ci, l'arbre excentrique est, à ses deux extrémités, monté dans et fixé à une rainure formée à l'extrémité inférieure du bras respectif (24), le corps élastique (41) est monté dans l'extrémité supérieure du bras respectif (24) de façon à ne pas tourner par rapport au bras (24) et autour de son axe, un boîtier (31) qui abrite l'extrémité supérieure du bras (24) et est ouvert vers le bas et fourchu est formé à l'extrémité de la fourche avant (5), le bras (24) est fixé à et supporté par des surfaces latérales espacées axialement du boîtier (31) pour former une structure intérieure par des moyens du corps d'arbre perçant à travers le corps élastique (41) dans la direction axiale, et le corps élastique (41) est fait pour ne pas tourner autour de l'axe du corps d'arbre.

11. Roue avant de bicyclette et mécanisme de commande de celle-ci selon la revendication 10, dans lesquels le corps élastique (41) est limité dans sa force élastique par serrage du boîtier (31) depuis les deux côtés axiaux.

12. Roue avant de bicyclette et mécanisme de commande de celle-ci selon la revendication 1, dans lesquels le corps élastique (41) est monté dans l'extrémité de la fourche avant (5), les bras (24) du dispositif de retenue excentrique (10) sont perpendiculaires à l'arbre excentrique et situés aux extrémités respectives de celui-ci, l'extrémité supérieure du bras (24) forme une partie fourchue, et le corps élastique (41) est tenu par cette partie fourchue dans la direction axiale et la partie arbre perce la partie fourchue et le corps élastique, de sorte que le bras (24) est fixé à et supporté par le fourche avant (5).

13. Roue avant de bicyclette et mécanisme de commande de celle-ci selon la revendication 12, dans lesquels le corps élastique (41) est limité dans sa force élastique par serrage de la partie fourchue du bras depuis les deux côtés axiaux.

14. Roue avant de bicyclette et mécanisme de commande de celle-ci selon la revendication 1, dans lesquels la surface latérale (62a) de la jante (62) constitue la surface de freinage et un patin de frein (63) constitue l'élément freinant.

15. Roue avant de bicyclette et mécanisme de commande de celle-ci selon la revendication 1, dans lesquels le domaine angulaire de basculement spécifié auquel le mouvement de bascule est limité est un domaine tel que la roue avant (6) ne pousse pas en haut un bombement de la fourche avant (5).

16. Roue avant de bicyclette et mécanisme de commande de celle-ci selon la revendication 2, dans lesquels une butée (31a) que heurte le bras (24) du dispositif de retenue excentrique (10) est montée à l'extrémité de la fourche avant (5), afin de limiter le mouvement de bascule, et un élément en caoutchouc (31b) est monté sur le côté de la butée (31a) contre laquelle a lieu le choc.

17. Roue avant de bicyclette et mécanisme de commande de celle-ci selon la revendication 16, dans lesquels une partie du bras (24) heurtant la butée (31a) est de forme ronde..
